# EUROPEAN PATENT SPECIFICATION

(11) **EP 1 536 690 B1**
(45) Date of publication and mention of the grant of the patent: **23.01.2008**
(21) Application number: 03760715.7
(22) Date of filing: 19.06.2003
(51) Int. Cl.: A23K 1/16

(54) **GROWTH PROMOTOR**
WACHSTUMSFÖRDERER
ANABOLISANT

(30) Priority: 24.06.2002 FI 20021234
(43) Date of publication of application: 08.06.2005
(73) Proprietor: Kemira Oyj, 00180 Helsinki (FI)
(72) Inventor: MIETTINEN, Harri, FIN-02400 Kirkkonummi (FI); LÖFGREN, Timo, FIN-02360 Espoo (FI)
(74) Representative: Svensson, Johan Henrik
(86) International application number: PCT/FI2003/000504
(87) International publication number: WO 2004/000037

(56) References cited:
- EP-A2- 0 701 778
- EP-A2- 1 205 115
- GB-A- 1 452 169
- US-A- 4 083 999
- KIRSI PARTANEN ET AL.: 'Performance of growing-finishing pigs fed medium- or high-fibre diets supplement with avilamycin, formic acid or formic acid - sorbate blend' LIVESTOCK PRODUCTION SCIENCE vol. 73, 2002, pages 139 - 152, XP002971965

## Description

The invention relates to a composition for promoting the growth of animals and to a method for preparing and using the composition.

Antibiotics have been added to the feed of slaughter animals in order to prevent diseases and to increase meat production. The use of antibiotics may result in resistant bacterial strains, which risk to be carried to humans along with the meat. This is the reason for efforts made to replace antibiotics with other compounds.

Antibiotics have lately been replaced with organic acids. Thus, for instance, the increase in weight of slaughter animals has been enhanced by means of sorbic acid (Kirchgessner M. et. al.; Journal of Animal Physiology and Animal Nutrition 74 (1995), 235-242). However, sorbic acid has proved too expensive to be adopted as a an alternative as such.

Studies have also confirmed that formic acid acts as a growth promoter in the feed of weaned pigs and swine grown for pork meat. It has also been found that the use of a mixture of formic acid and potassium sorbate results in better efficiency compared to the use of formic acid (Partanen K. et. al.; Livestock Production Science 73(2002) 139-152).

The combined use of formic acid and potassium sorbate involves the problem of one of the components being liquid and the other solid. It would be desirable to find a means of providing a liquid product containing formic acid and sorbic acid or a sorbate that can be dispensed in liquid state also at low temperatures. Sorbate and sorbic acid are so poorly soluble in formic acid that an efficient amount cannot be dissolved.

The use of sorbic acid and its salts as food and feed preservatives is also known. Sorbate in acid form alone is known to possess anti-microbial properties. Consequently, the effect of salts has been enhanced by adding an acid besides sorbate to the material to be preserved, as described in EP patent application 0275 958, among other publications.

Chinese patent application CN 1 269 979 discloses an anti-mildew feed preservative based on potassium sorbate, which has been boosted with an organic acid. The organic acid may be formic acid, propionic acid or a mixture of these. Sorbate crystals are milled to a 60 to 150 mesh grinding fineness, the acid is added and the mixture is allowed to react completely at constant temperature. The mixture ratio has been selected so as to generate a solid reaction product during the reaction. When the solid product thus obtained is crushed, the desired preservative is obtained.

The solutions of US patent specification 4,083,999, containing 0.6 to 20% of sorbic acid in propionic acid, are previously known in an anti-mildew method for preserving animal feed.

The purpose of this invention is to provide a liquid product, which can be dispensed in liquid state also at low temperatures, while still utilising the animal growth promoting effects especially of formic acid and sorbate. As a solution to this problem, liquid compositions were found, which contain both sorbic acid or a sorbate and formic acid as a homogenous solution. These purposes can be surprisingly achieved with the aid of a composition of formic acid and sorbic acid or a sorbate and propionic acid. Calculated on their weight, the compositions of the invention contain
- 1.1 to 5% of sorbic acid or a sorbate calculated as sorbic acid,
- 45 to 93.9% of formic acid and
- 5 to 50% of propionic acid.

The composition of the invention contains preferably 2 to 5 % by weight of sorbic acid or sorbate calculated as sorbic acid, 45 to 90 % by weight of formic acid and 8 to 50 % by weight of propionic acid.

The sorbate is preferably potassium sorbate.

The concentration of formic acid is preferably at least 70 % by weight.

In preferred compositions, a portion of the acid content of the composition is neutralised. In a preferred composition, the formic acid is partly neutralised with ammonia.

The composition of the invention may further contain water.

A preferred composition of the invention contains 2 to 4 % by weight of sorbic acid or a sorbate calculated as sorbic acid, 70 to 90 % by weight of partly neutralised formic acid and 8 to 20 % by weight of propionic acid and 0 to 20 % by weight of water.

In accordance with the invention, the composition can be prepared by dissolving sorbic acid or a sorbate in propionic acid, thus yielding soluble sorbic acid or sorbate. Formic acid is then added to this solution, thus forming a solution ready for use.

The characterising features of the invention are described in the accompanying claims 1 to 16.

It has been found that antibiotic feed additives can be replaced in the feed of slaughter animals with a growth-promoting composition, which contains sorbic acid, formic acid and propionic acid. The anti-microbial and animal growth promoting effect of sorbic acid or sorbate has been enhanced by using acid conditions. Due to the high cost of sorbic acid or sorbate, it was desirable to find an economical, but still efficient active acid for use with sorbic acid or sorbate. Formic acid as such has proved an efficient growth promoter with regard to slaughter animals. It has proved to have an advantageous effect especially in the feeding of pigs and swine grown for pork meat in reducing the tendency of swine to develop diarrhoea and coliform bacteria in the alimentary canals. As the poor solubility of sorbic acid or sorbate in formic acid was resolved by first dissolving it in propionic acid and the actual solution ready for use was obtained by adding the solution of sorbic acid/sorbate/propionic acid to formic acid, the liquid composition of the invention was obtained, which proved a highly efficient growth promoter for slaughter animals.

During the use of the product of the invention, it was noted that slaughter animals, such as beef cattle and especially swine developed less diarrhoea and that their meat mass increased appreciably.

The preparation of the invention can be administered in connection with the feeding of slaughter animals by adding it to the feed. The growth promoter can be added to the feed of slaughter animals either in liquid form or, if the circumstances so require, absorbed into a solid carrier.

The feed may be any organic product suitable for slaughter animals, such as feed raw materials, feed preparations, corn, vegetable or organic protein feed. The feed proper is fed to the animals in liquid form admixed in water or in solid form.

The following examples are intended to illustrate the invention, yet without limiting the invention to the accompanying examples.

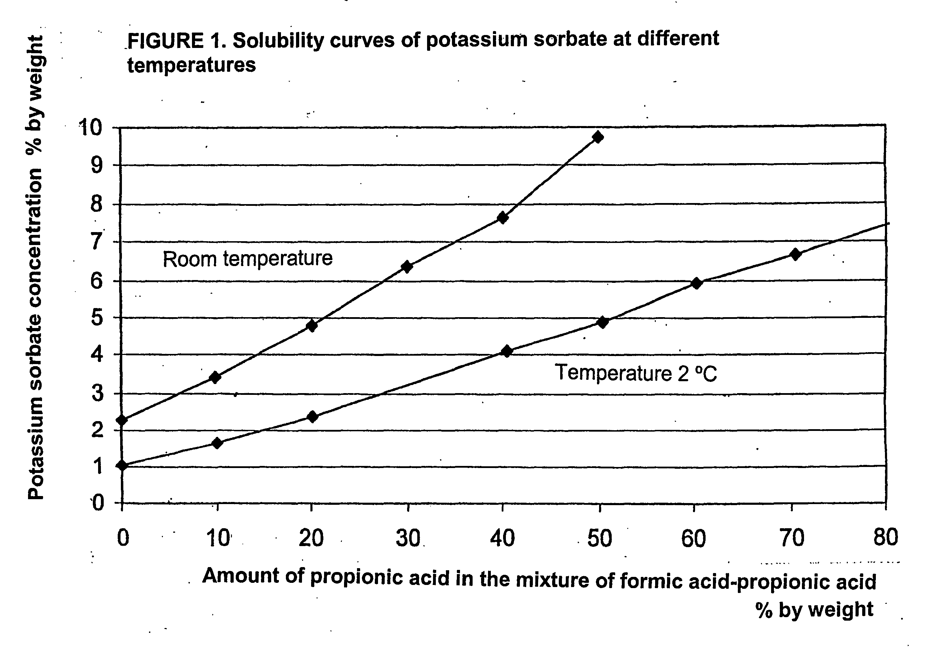

The accompanying figure 1 illustrates the solubility curves of potassium sorbate at different temperatures.

### Examples

In the following examples, sorbic acid was added in the form of potassium salt in all of the examples. However, in the presence of formic acid (pK 3.73), potassium sorbate occurs primarily as sorbic acid in the final solution, because the pK value of sorbic acid is 4.76, and correspondingly, the pK value of propionic acid is 4.86.

The partly neutralised formic acid product used in the examples contains 76 % by weight of formic acid, 5.5 % by weight of ammonium formate and 18.5 % by weight of water.

### Examples 1 to 4 (comparison)

Potassium sorbate in varied amounts was dissolved in a partly neutralised formic acid product by heating so that clear solutions were obtained. Samples of these were stored at room temperature (about 22 °C), 4 °C and - 18 °C. At the end of about 10 days, the crystallisations formed in the samples were examined, with the results shown in the table. In an examination made at the end of about 50 days, crystals were observed in the sample of example 4 also at room temperature.

**Table 1 (comparison)**

| | Potassium sorbate % by weight | Room temperature | 4 °C | -18 °C |
|---|---|---|---|---|
| Example 1 | 0.84 | Clear solution | Clear solution | Crystals |
| Example 2 | 1.66 | Clear solution | Crystals | Crystals |
| Example 3 | 3.27 | Clear solution | Crystals | Crystals |
| Example 4 | 4.05 | (Clear solution) | Crystals | Crystals |

The result of example 1, which showed moderate preservability, 0.84 % by weight of potassium sorbate, equals about 0.6 % by weight of sorbic acid, this being too low a content for the intended purpose.

### Examples 5 to 7.

50 g of potassium sorbate was dissolved into a 1 litre-volume of 99 % by weight formic acid, 99 % by weight propionic acid and 1:1 of both, 1 litre of each product containing sorbate in the same amount (examples 5 to 7).

The samples were treated as in the preceding example.

**Table 2**

| | Acid | Room temperature | 4 °C | -18 °C |
|---|---|---|---|---|
| Example 5 (comp.) | Propionic acid | Clear solution | Clear solution | Clear solution |
| Example 6 (comp.) | Formic acid | Clear solution | Crystals | Crystals |
| Example 7 | Mixture of formic acid and propionic acid | Clear solution | Clear solution | Crystals |

### Examples 8 to 11.

Potassium sorbate was dissolved in mixtures of partly neutralised formic acid and propionic acid in the weight ratios shown in table 3 by heating the mixtures so as to yield clear solutions.

**Table 3.**

| Compositions, % by weight | Example 8 | Example 9 | Example 10 | Example 11 |
|---|---|---|---|---|
| Formic acid | 77.5 | 67.5 | 57.5 | 47.5 |
| Propionic acid | 20 | 30 | 40 | 50 |
| Potassium sorbate | 2.5 | 2.5 | 2.5 | 2.5 |
| Neutralisation degree mol/100 mol | 5.2 | 4.8 | 4.3 | 3.8 |
| Water | 14.3 | 12.5 | 10.6 | 8.8 |

All of the solutions remained clear at room temperature over the entire monitoring period, i.e. 3 weeks. The following table 4 shows the behaviour of three parallel samples in cooled solutions. The dash indicates a clear solution.

**Table 4**

| Storage conditions | Example 8 | Example 9 | Example 10 | Example 11 |
|---|---|---|---|---|
| 1 week | - | - | - | - |
| at + 1 °C | - | - | - | - |
| | - | - | - | - |
| 3 weeks | - | - | - | - |
| at +1 °C | - | - | - | - |
| | - | - | - | - |

### Example 12.

10 g of potassium sorbate was dissolved in 100 g of mixtures of formic acid (99%) and propionic acid (99.5%) by heating so as to yield clear solutions. When cooled, the solutions developed deposits, which were removed by filtering at the end of a 1-week stabilisation period carried out at two different temperatures. The contents of sorbic acid, formic acid and propionic acid were analysed in the clear solutions. Table 5 indicates the sorbic acid result calculated as potassium sorbate and the percentage of propionic acid calculated on the sum of propionic and formic acid.

**Table 5.**

| Sample | | |
|---|---|---|
| Room temperature | Potassium sorbate % by weight | Amount % by weight of propionic acid of the sum of formic acid and propionic acid |
| 1 | 2.3 | 0.0 |
| 2 | 3.4 | 9.9 |
| 3 | 4.8 | 20.2 |
| 4 | 6.4 | 30.2 |
| 5 | 7.7 | 40.1 |
| 6 | 9.7 | 50.1 |

| Temperature 2 °C | | |
|---|---|---|
| 1 | 1.0 | 0.0 |
| 2 | 1.7 | 10.0 |
| 3 | 2.4 | 20.2 |
| 4 | 4.1 | 40.5 |
| 5 | 4.9 | 50.5 |
| 6 | 5.9 | 60.4 |
| 7 | 6.7 | 70.4 |
| 8 | 7.4 | 80.4 |

Figure 1 shows the solubility curves of potassium sorbate at room temperature 22 °C and at 2 °C. Compared to the solubility curve, the proportion of propionic acid of the sum of formic acid and propionic acid should be about 5 to 10 percent units higher in practice.

### Example 13.

The composition of the invention was needed in amounts of several tens of litres for swine tests. It was found that the dissolution of potassium sorbate as described above into a mixture of formic acid and propionic acid should be performed in a well equipped reactor, given highly evaporative acids that would require heating. As a result of the laboratory tests, a markedly easier manner of preparation was surprisingly found. In fact, it was found that preparation could be effected even at room temperature, with the potassium sorbate used in the composition first dissolved in propionic acid. The final composition was obtained by adding formic acid to a solution of potassium sorbate and propionic acid.

### Example 14.

The composition of the invention was tested using weaned pigs and growing swine. The test comprised a total of 240 swine from 30 different litters. The composition of the invention or formic acid was added to the swine feed in a ratio of 8g/kg at the initial growth stage and in a ratio of 6g/kg at the growth and final growth stage. The composition of the invention was compared to a control without additives and to an antibiotic feed additive (Avilamycin) at the weaning and growth stage. Table 6 shows the test results with the administration of pig feed containing as additives avilamycin, formic acid and a mixture of potassium sorbate- formic acid-propionic acid. In the table A = avilamycin, F- formic acid and S = potassium sorbate and P = propionic acid.

**Table 6.**

| Additive | Control | A | F | SFP |
|---|---|---|---|---|
| Weaning stage | | | | |
| Initial weight/kg | 7.5 | 7.5 | 7.6 | 7.8 |
| Final weight/kg | 17.2 | 19.3 | 18.5 | 19.0 |
| Daily growth g/day | 273 | 335 | 308 | 321 |
| Growth and final growth stage | | | | |
| Initial weight/kg | 18.8 | 18.9 | 17.1 | 18.0 |
| Final weight/kg | 105.7 | 107.1 | 106.0 | 107.3 |
| Daily growth g/day | 834 | 845 | 869 | 880 |

The results indicate that swine grew more rapidly when the composition of the invention was added to the feed. The growth was also stronger than that of swine that received formic acid alone.

## Claims

1. An animal growth promoting composition, **characterised in** being a liquid solution comprising 1.1 to 5 % by weight of a sorbic acid or a sorbate calculated as sorbic acid, 45 to 93.9 % by weight of formic acid and 5 to 50 % by weight of propionic acid.

2. A composition as defined in claim 1, **characterised in that** the sorbate is potassium sorbate.

3. A composition as defined in claim 1 or 2, **characterised in that** the formic acid has a concentration of at least 70 % by weight.

4. A composition as defined in any of claims 1 to 3, **characterised in that** the formic acid is partly neutralised with ammonia.

5. A composition as defined in any of claims 1 to 4, **characterised in that** the composition additionally contains water.

6. A composition as defined in any of claims 1 to 5, **characterised in that** the composition comprises 2 to 4 % by weight of sorbic acid or a sorbate calculated as sorbic acid, 70 to 90 % by weight of partly neutralised formic acid and 8 to 20 % by weight of propionic acid and 0 to 20 % by weight of water.

7. A method for preparing an animal growth promoting composition, **characterised in that** sorbic acid or a sorbate is first dissolved in propionic acid, the solution being subsequently mixed into formic acid in order to form solution ready for use.

8. A method as defined in claim 7, **characterised in that** the sorbate is potassium sorbate.

9. A method as defined in claim 7, **characterised in that** the formic acid has a concentration of at least 70 % by weight.

10. A method as defined in claim 7, **characterised in that** the formic acid is partly neutralised with ammonia.

11. A method as defined in any of claims 7 to 10, **characterised in that** the solution ready for use comprises 2 to 5 % by weight of sorbic acid or a sorbate calculated as sorbic acid, 45 to 90 % by weight of formic acid and 8 to 50 % by weight of propionic acid.

12. A method as defined in claim 11, **characterised in that** the solution ready for use additionally contains water.

13. Use of a composition defined in claim 1 as a growth promoter for slaughter animals.

14. Use of a composition defined in claim 1 as a growth promoter, **characterised in that** the growth promoter is administered to animals in connection with feeding.

15. Use of a composition defined in claim 1 as a growth promoter, **characterised in that** the growth promoter is added to animal feed in liquid form or absorbed into a solid carrier.

16. Use of a composition defined in claim 15 as a growth promoter, **characterised in that** the animal feed is selected among organic products, such as feed raw materials, feed preparations, corn, vegetable and animal protein feed.

## Patentansprüche

1. Wachstumsfördernde Zusammensetzung für Tiere, **dadurch gekennzeichnet, daß** sie eine flüssige Lösung ist, die 1,1 bis 5 Gew.-% einer Sorbinsäure oder eines Sorbates, berechnet als Sorbinsäure, 45 bis 93,9 Gew.-% Ameisensäure und 5 bis 50 Gew.-% Propionsäure umfaßt.

2. Zusammensetzung wie in Anspruch 1 definiert, **dadurch gekennzeichnet, daß** das Sorbat Kaliumsorbat ist.

3. Zusammensetzung wie in Anspruch 1 oder 2 definiert, **dadurch gekennzeichnet, daß** die Ameisensäure eine Konzentration von wenigstens 70 Gew.-% hat.

4. Zusammensetzung wie in irgendeinem der Ansprüche 1 bis 3 definiert, **dadurch gekennzeichnet, daß** die Ameisensäure teilweise mit Ammoniak neutralisiert ist.

5. Zusammensetzung wie in irgendeinem der Ansprüche 1 bis 4 definiert, **dadurch gekennzeichnet, daß** die Zusammensetzung zusätzlich Wasser enthält.

6. Zusammensetzung wie in irgendeinem der Ansprüche 1 bis 5 definiert, **dadurch gekennzeichnet, daß** die Zusammensetzung 2 bis 4 Gew.-% Sorbinsäure oder eines Sorbates, berechnet als Sorbinsäure, 70 bis 90 Gew.-% von teilweise neutralisierter Ameisensäure und 8 bis 20 Gew.-% Propionsäure und 0 bis 20 Gew.-% Wasser umfaßt.

7. Verfahren zur Herstellung einer wachstumsfördernden Zusammensetzung für Tiere, **dadurch gekennzeichnet, daß** Sorbinsäure oder ein Sorbat zuerst in Propionsäure aufgelöst wird, und die Lösung nachfolgend in Ameisensäure eingemischt wird, um gebrauchsfertige Lösung zu bilden.

8. Verfahren wie in Anspruch 7 definiert, **dadurch gekennzeichnet, daß** das Sorbat Kaliumsorbat ist.

9. Verfahren wie in Anspruch 7 definiert, **dadurch gekennzeichnet, daß** die Ameisensäure eine Konzentration von wenigstens 70 Gew.-% hat.

10. Verfahren wie in Anspruch 7 definiert, **dadurch gekennzeichnet, daß** die Ameisensäure teilweise mit Ammoniak neutralisiert ist.

11. Verfahren wie in irgendeinem der Ansprüche 7 bis 10 definiert, **dadurch gekennzeichnet, daß** die gebrauchsfertige Lösung 2 bis 5 Gew.-% Sorbinsäure oder eine Sorbat, berechnet als Sorbinsäure, 45 bis 90 Gew.-% Ameisensäure und 8 bis 50 Gew.-% Propionsäure umfaßt.

12. Verfahren wie in Anspruch 11 definiert, **dadurch gekennzeichnet, daß** die gebrauchsfertige Lösung zusätzlich Wasser enthält.

13. Verwendung einer Zusammensetzung wie in Anspruch 1 definiert als ein Wachstumsförderer für Schlachttiere.

14. Verwendung einer Zusammensetzung wie in Anspruch 1 definiert als ein Wachstumsförderer, **dadurch gekennzeichnet, daß** der Wachstumförderer Tieren in Verbindung mit Fütterung appliziert wird.

15. Verwendung einer Zusammensetzung wie in Anspruch 1 definiert als ein Wachstumsförderer, **dadurch gekennzeichnet, daß** der Wachstumförderer zu Tierfutter in flüssiger Form oder absorbiert in einem festen Träger zugesetzt wird.

16. Verwendung einer Zusammensetzung wie in Anspruch 15 definiert als ein Wachstumsförderer, **dadurch gekennzeichnet, daß** das Tierfutter unter organischen Produkten, wie Futterrohmaterialien, Futterpräparationen, Mais, pflanzlichen und tierischem Proteinfutter ausgewählt ist

## Revendications

1. Composition destinée à promouvoir la croissance animale, **caractérisée en ce qu'**elle est une solution liquide comprenant 1,1 à 5 % en poids d'un acide sorbique ou d'un sorbate calculé sous la forme acide sorbique, 45 à 93,9 % en poids d'acide formique et 5 à 50 % en poids d'acide propionique.

2. Composition selon la revendication 1, **caractérisée en ce que** le sorbate est du sorbate de potassium.

3. Composition selon la revendication 1 ou 2, **caractérisée en ce que** l'acide formique a une concentration d'au moins 70 % en poids.

4. Composition selon l'une quelconque des revendications 1 à 3, **caractérisée en ce que** l'acide formique est partiellement neutralisé par l'ammoniac.

5. Composition selon l'une quelconque des revendications 1 à 4, **caractérisée en ce que** la composition contient en outre de l'eau.

6. Composition selon l'une quelconque des revendications 1 à 5, **caractérisée en ce que** la composition comprend 2 à 4 % en poids d'acide sorbique ou d'un sorbate calculé sous la forme acide sorbique, 70 à 90 % en poids d'acide formique partiellement neutralisé et 8 à 20 % en poids d'acide propionique et 0 à 20 % en poids d'eau.

7. Procédé de préparation d'une composition destinée à promouvoir la croissance animale, **caractérisé en ce que** de l'acide sorbique ou un sorbate est d'abord dissous dans l'acide propionique, la solution étant ensuite mélangée dans l'acide formique afin de former une solution prête à l'emploi.

8. Procédé selon la revendication 7, **caractérisé en ce que** le sorbate est du sorbate de potassium.

9. Procédé selon la revendication 7, **caractérisé en ce que** l'acide formique a une concentration d'au moins 70 % en poids.

10. Procédé selon la revendication 7, **caractérisé en ce que** l'acide formique est partiellement neutralisé par l'ammoniac.

11. Procédé selon l'une quelconque des revendications 7 à 10, **caractérisé en ce que** la solution prête à l'emploi comprend 2 à 5 % en poids d'acide sorbique ou d'un sorbate calculé sous la forme acide sorbique, 45 à 90 % en poids d'acide formique et 8 à 50 % en poids d'acide propionique.

12. Procédé selon la revendication 11, **caractérisé en ce que** la solution prête à l'emploi contient en outre de l'eau.

13. Utilisation d'une composition selon la revendication 1 comme promoteur de croissance pour les animaux d'abattoir.

14. Utilisation d'une composition selon la revendication 1 comme promoteur de croissance, **caractérisée en ce que** le promoteur de croissance est administré aux animaux en lien avec l'alimentation.

15. Utilisation d'une composition selon la revendication 1 comme promoteur de croissance, **caractérisée en ce que** le promoteur de croissance est ajouté aux aliments pour animaux sous forme liquide ou absorbé dans un support solide.

16. Utilisation d'une composition selon la revendication 15 comme promoteur de croissance, **caractérisée en ce que** les aliments pour animaux sont choisis parmi des produits organiques, tels que des matières premières pour l'alimentation animale, des préparations pour l'alimentation animale, du maïs, des aliments à base de protéines végétales et animales.
